# EUROPÄISCHE PATENTSCHRIFT

(11) **EP 3 252 241 B1**
(45) Veröffentlichungstag und Bekanntmachung des Hinweises auf die Patenterteilung: **29.04.2020**
(21) Anmeldenummer: 17162528.8
(22) Anmeldetag: 23.03.2017
(51) Int. Cl.: E03F 1/00, C02F 3/00, C02F 103/00

(54) **MULDENABSCHNITT EINER VERSICKERUNGSMULDE, MIT RESERVESPEICHER**
TROUGH SECTION OF A SEEPAGE TROUGH, WITH RESERVE STORAGE
BASSIN DE FILTRATION AVEC RÉSERVOIR DE STOCKAGE

(30) Priorität: 30.05.2016 DE 202016102842 U
(43) Veröffentlichungstag der Anmeldung: 06.12.2017
(73) Patentinhaber: Funke Kunststoffe GmbH, 59071 Hamm-Uentrop (DE)
(72) Erfinder: Funke, Norbert, 48324 Sendenhorst (DE); Funke, Hans Günter, 48324 Sendenhorst (DE)
(74) Vertreter: Habbel, Ludwig

(56) Entgegenhaltungen:
- EP-A1- 2 977 516
- EP-A2- 1 291 325
- WO-A2-2009/129533
- DE-A1- 19 608 201
- DE-C1- 4 403 454

## Beschreibung

Die Erfindung betrifft einen Muldenabschnitt nach dem Oberbegriff des Anspruchs 1.

Ein gattungsgemäßer Muldenabschnitt ist aus der EP 1 291 325 A2 bekannt, die den am nächsten kommenden Stand der Technik darstellt. Im Rahmen des vorliegenden Vorschlags wird zwischen einer Rinne und einer Mulde unterschieden, wobei eine Rinne im Wesentlichen geschlossenwandig ausgestaltet ist, um Flüssigkeit von einer zu einer anderen Stelle in Längsrichtung der Rinne zu führen, während im Unterschied dazu eine Mulde Versickerungsöffnungen aufweist, um in die Mulde gelangte Flüssigkeit möglichst an Ort und Stelle in den Untergrund versickern zu lassen. Der Innenraum der Mulde dient vielmehr als Behandlungsraum, um mittels eines geeigneten Substrats, welches in die Mulde eingefüllt ist, das eingedrungene Wasser biologisch zu behandeln und ggf. auch rein mechanisch zu filtrieren, so dass im Ergebnis das von der Mulde abgegebene, versickerte Wasser möglichst frei von Schadstoffen ist. Die gattungsgemäßen Muldenabschnitte haben sich in der Praxis hervorragend bewährt.

Aus der DE 196 08 201 A1 ist kein Muldenabschnitt, sondern ein Sickerschacht bekannt, der ebenfalls zum Versickern von Wasser dient. Das Wasser gelangt bei diesem bekannten Sickerschacht in einen äußeren Ringraum, der zwei Absetzkammern aufweist und als Absetzbecken für Schlamm und andere Feststoffe dient, die schwerer als Wasser sind. Dabei gelangt das Wasser zunächst in ein erstes der beiden Absetzbecken. Von diesem gelangt es durch eine Schwimmschichtsperre in das zweite Absetzbecken, so dass Schwimmstoffe zurückgehalten werden. Der äußere Ringraum umgibt einen zentralen inneren Ringraum, in dem Kies als Filtermaterial angeordnet ist. Über ein Verbindungsrohr strömt das Wasser aus dem zweiten Absetzbecken in den inneren Ringraum und gelangt durch den Kiesfilter zu einer zentralen Abflussöffnung, welche so ausgestaltet ist, dass ein Ausschwemmen des Kieses verhindert wird.

Aus der DE 44 03 454 C1 ist eine Versickerungsmulde bekannt, bei welcher ein Muldenabschnitt nicht nur mit einem Substrat zur biologischen Behandlung des Wassers gefüllt ist, sondern auch mit einer Filtermatte ausgekleidet ist. Das Wasser gelangt daher nach der biologischen Behandlung, wenn es durch das Substrat geströmt ist, nicht unmittelbar an die Wand oder den Boden des Muldenkörpers, sondern in die Filtermatte, so dass hier auch noch eine mechanische Behandlung des Wassers in Form einer Filtration erfolgt, bevor das Wasser in Spaltrinnen gesammelt und anschließend versickert wird.

Der vorliegenden Erfindung liegt die Aufgabe zugrunde, einen gattungsgemäßen Muldenabschnitt dahingehend zu verbessern, dass dieser über einen besonders langen Zeitraum die gewünschte Wasserbehandlung des in die Mulde gelangten Oberflächenwassers ermöglicht.

Diese Aufgabe wird durch einen Muldenabschnitt nach Anspruch 1 gelöst. Vorteilhafte Ausgestaltungen sind in den Unteransprüchen beschrieben.

Die Erfindung schlägt mit anderen Worten vor, in dem Muldenabschnitt einen Raum abzutrennen, der als Reservespeicher bezeichnet wird und der mit dem selben Substrat befüllt wird, wie der übrige Innenraum des Muldenabschnitts, so dass Substrat sowohl innerhalb des Reservespeichers als auch außerhalb des Reservespeichers angeordnet ist. Der Reservespeicher kann von oben nach unten von der Flüssigkeit durchströmt werden, so dass das behandelte Wasser, welches als Oberflächenwasser in dem Reservespeicher eingelaufen ist, frei von Schadstoffen am unteren Ende aus dem Reservespeicher austreten kann. Dadurch, dass der Reservespeicher eine umlaufende Wand aufweist, ist jedoch eine horizontale Durchströmung erschwert bzw. verhindert, die zwischen dem übrigen Innenraum des Muldenabschnitts und dem Innenraum des Reservespeichers ansonsten stattfinden könnte. Dabei ist vorschlagsgemäß vorgesehen, dass der Reservespeicher im mittleren Bereich des Innenraums angeordnet ist, denn der vorliegende Vorschlag geht von der Überlegung aus, dass das Oberflächenwasser stets entlang der Seitenwände in dem Innenraum des Muldenabschnitts einströmt, beispielsweise wenn asphaltierte oder gepflasterte Verkehrsflächen an die beiden Längsseiten der Mulde und somit des jeweiligen Muldenabschnitts anschließen.

Der vorliegende Vorschlag geht von der Überlegung aus, dass nach der Inbetriebnahme der Versickerungsmulde oder nach deren erneuter Befüllung mit frischem Substrat zunächst kaum Oberflächenwasser in den Reservespeicher gelangen wird. Vielmehr strömt das Oberflächenwasser, wie beschrieben, an den beiden Seitenwänden in den Innenraum des Muldenabschnitts und gelangt somit erst gar nicht in den Reservespeicher, der sich ja im mittleren Bereich des Innenraums befindet. Direkt von oben in die Mulde gelangende Niederschläge sorgen dafür, dass die biologisch wirksamen Anteile im Substrat nicht über Monate oder Jahre austrocknen und absterben. Allerdings erfolgt kaum ein Eintrag von Partikeln in den Reservespeicher, da beispielsweise Reifenabrieb, Staub, Pollen und sonstige Partikel, die sich auf an die Mulde angrenzenden Verkehrsflächen befinden, vielmehr mit dem Oberflächenwasser in die Mulde eingeschwemmt werden, also in den Innenraum der Mulde entlang der beiden Seitenwände einströmen und somit nicht in den Reservespeicher gelangen.

Über einen Zeitraum von mehreren Jahren werden daher die Partikel, die in den Innenraum des Muldenabschnitts geschwemmt werden, dazu führen, dass die Versickerungsleistung des Muldenabschnitts nachlässt, also innerhalb eines bestimmten Zeitraums die den Muldenabschnitt von oben nach unten durchströmende Wassermenge geringer wird. Dies hat zur Folge, dass sich das einströmende Wasser weiter nach oben innerhalb der Mulde aufstaut.

Eine vorteilhafte Ausgestaltung des vorschlagsgemäßen Muldenabschnitts besteht darin, dass die Zulauföffnung des Reservespeichers höher angeordnet ist als der Füllstand des Substrats in dem Muldenabschnitt. Wenn der Muldenabschnitt zu Gunsten einer einfachen Handhabung beim Erstellen und erstmaligen Befüllen der Mulde eine Füllstandsmarkierung im Innenraum aufweist, bis zu welcher das Substrat einzufüllen ist, so ist dementsprechend vorteilhaft die Zulauföffnung des Reservespeichers höher angeordnet als diese Füllstandsmarkierung. Die Füllstandsmarkierung kann beispielsweise durch Versteifungsstreben, vorspringende Rippen o. dgl. verwirklicht sein, die an den Seitenwänden des Muldenabschnitts oder an der Wand des Reservespeichers vorgesehen sind oder die als Aussteifungselemente zwischen den Seitenwänden des Muldenabschnitts verlaufen.

Wenn sich nach einem mehrjährigen Betrieb der Mulde bzw. bei einer mehrjährigen Verwendung des Substrats aufgrund der beschriebenen Veränderungen, oder auch wenn bereits vorher aufgrund eines Großniederschlagsereignisses die Höhe des Wasserniveaus im Muldenabschnitt so hoch ansteigt, dass nun auch Wasser in die Zulauföffnung des Reservespeichers gelangen kann, so kann zusätzlich zu der ansonsten benutzten Versickerungsfläche, die im Innenraum des Muldenabschnitts bereitgestellt ist, Wasser durch den Reservespeicher nach unten strömen, so dass mit einer doppelten Wirkung die Versickerungsleistung des Muldenabschnitts verbessert wird: Einerseits wird ohnehin eine größere Versickerungsfläche zur Verfügung gestellt, und zweitens ist die Versickerungsleistung des Substrats innerhalb des Reservespeichers üblicherweise höher als die Versickerungsleistung des Substrats außerhalb des Reservespeichers, weil innerhalb des Reservespeichers ein vergleichsweise großes Porenvolumen bereitgestellt werden kann, welches noch nicht durch eingeschwemmte Partikel in demselben Maße verringert bzw. verstopft worden ist wie im Substrat außerhalb des Reservespeichers.

In einer ersten Ausgestaltung kann vorgesehen sein, dass die Wand des Reservespeichers im Abstand von den Seitenwänden des Muldenabschnitts verläuft, so dass besonders zuverlässig sichergestellt ist, dass üblicherweise, also bei normalen Niederschlagsmengen und in der ersten Zeit der Benutzung eines Substrats, das in die Mulde an den Seitenwänden einströmende Oberflächenwasser nicht in den Reservespeicher gelangt. Bei dieser Ausgestaltung des Muldenabschnitts kann vorteilhaft vorgesehen sein, dass diese von den Seitenwänden beabstandete Wand des Reservespeichers durch Verbindungsstege an die Seitenwände des Muldenabschnitts angebunden ist, so dass hierdurch eine deutliche Erhöhung der mechanischen Stabilität des Muldenabschnitts bewirkt werden kann, indem diese Verbindungsstege und die Wand des Reservespeichers gemeinsam wie Aussteifungsstege wirken, die zwischen den beiden Wänden des Muldenabschnitts verlaufen.

Alternativ dazu, die Wand des Reservespeichers im Abstand von den Seitenwänden verlaufen zu lassen, kann jedoch auch vorgesehen sein, dass die Wand des Reservespeichers an die Seitenwände angrenzt. Um dennoch die erläuterte Funktion des Reservespeichers sicherzustellen, ist in diesem Fall vorgesehen, dass sich die Querschnittsfläche des Reservespeichers zu den Seitenwänden hin verringert. So kann beispielsweise vorgesehen sein, dass der Reservespeicher einen quadratischen Querschnitt aufweist, wobei die Wände des Reservespeichers nicht parallel zu den Seitenwänden des Muldenabschnitts verlaufen, sondern schräg dazu, so dass die Wände des Reservespeichers mit zwei Spitzen des quadratischen Querschnitts an die Seitenwände des Muldenabschnitts anschließen und auf diese Weise ebenfalls kein nennenswerter Eintrag von Partikeln in den Reservespeicher erfolgt, sofern der Füllstand des Wassers in der Mulde nicht entsprechend hoch, bis zur Zulauföffnung reichend, angestiegen ist.

Unabhängig von der Geometrie des Reservespeichers kann vorteilhaft vorgesehen sein, dass die Zulauföffnung des Reservespeichers im Abstand von den Seitenwänden des Muldenabschnitts angeordnet ist, um einen direkten Eintrag des in die Mulde einströmenden Oberflächenwassers möglichst zu vermeiden und den Eintritt von Wasser in den Reservespeicher möglichst erst dann zu bewirken, wenn sich ein entsprechend hoher Füllstand des Wassers in der Mulde eingestellt hat.

Vorteilhaft kann der Reservespeicher unten an den Boden des Muldenabschnitts anschließen. Auf diese Weise wird der Stabilitätsgewinn, den der Reservespeicher mit seiner Wand für die Konstruktion des Muldenabschnitts ermöglicht, weiter verbessert, indem nämlich ein Verbund zwischen dem Reservespeicher und dem Boden des Muldenabschnitts bewirkt wird. Dabei kann vorgesehen sein, dass der Reservespeicher oberhalb von Versickerungsöffnungen angeordnet ist, die im Boden der Mulde vorgesehen sind, so dass in einer direkten Bewegung von oben nach unten das in den Reservespeicher eingedrungene Wasser nach unten durch diese Versickerungsöffnungen ausströmen kann. Die im Boden vorgesehen Versickerungsöffnungen können in diesem Fall die Ablauföffnungen des Reservespeichers bilden.

Alternativ oder auch ergänzend dazu kann vorgesehen sein, dass auch die Wand des Reservespeichers im unteren Bereich einen Durchbruch aufweist, der als Ablauföffnung dient, so dass Wasser aus dem Zwischenspeicher, nachdem es das Substrat durchströmt hat und dementsprechend biologisch behandelt und mechanisch filtriert worden ist, in den Hauptraum im Inneren des Muldenabschnitts strömen kann und zu dort vorgesehenen Versickerungsöffnungen gelangen kann.

Vorteilhaft kann der Reservespeicher eine kreisrunde Wand aufweisen. Auf diese Weise wird ein bestimmtes Innenvolumen des Reservespeichers mit einem möglichst geringen Materialaufwand umschlossen, was eine kostengünstige Fertigung des Muldenabschnitts unterstützt. Zudem ergibt sich eine Verringerung der Querschnittsfläche zu den beiden Seitenwänden des Muldenabschnitts hin.

Vorteilhaft kann vorgesehen sein, dass der Reservespeicher über seinen gesamten Querschnitt durchströmbar ist, also eine Zulauföffnung aufweist, die lediglich von der Wand des Reservespeichers begrenzt ist, so dass sich seine Zulauföffnung über den gesamten Querschnitt des Reservespeichers erstreckt.

Ein Ausführungsbeispiel der Erfindung wird anhand der rein schematischen Darstellung nachfolgend näher erläutert.

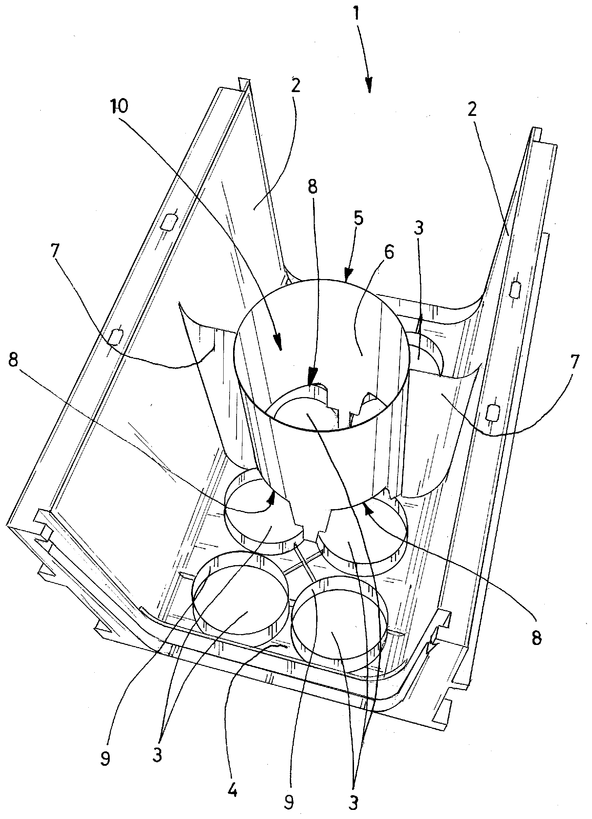

Die Zeichnung zeigt in perspektivischer Ansicht von oben einen Muldenabschnitt 1, der mit mehreren gleichartigen Muldenabschnitten zu einer länglichen Versickerungsmulde verbunden werden kann. Der Muldenabschnitt 1 weist zwei Längswände in Form von geschlossenen Seitenwänden 2 auf und einen mit Versickerungsöffnungen 3 versehenen Boden 4.

Bei dem dargestellten Ausführungsbeispiel ist vorgesehen, dass benachbarte Muldenabschnitte 1 flüssigkeitsdicht aneinander anschließen und die Versickerung ausschließlich durch die dargestellten Versickerungsöffnungen 3 erfolgt. Abweichend von dem dargestellten Ausführungsbeispiel kann vorgesehen sein, dass auch im Anschlussbereich zweier benachbarter Muldenabschnitte 1 durch entsprechende Ausnehmungen Versickerungsöffnungen geschaffen werden.

Der Muldenabschnitt 1 weist in seinem mittleren Bereich einen Reservespeicher 5 auf, der zu den Seiten hin durch eine aufrecht, kreisrunde Wand 6 begrenzt ist. Die Wand 6 verläuft im Abstand zu den beiden Seitenwänden 2, ist jedoch durch Verbindungsstege 7 mit den Seitenwänden 2 verbunden, wodurch die mechanische Stabilität des Muldenabschnitts erhöht wird.

Nach unten erstreckt sich die Wand 6 bis zum Boden 4, wobei der gesamte dargestellte Muldenabschnitt 1 als Spritzgussteil aus Kunststoff hergestellt ist und so ein stabiler Verbund zwischen dem Boden 4, der Wand 6, den Verbindungsstegen 7 und den Seitenwänden 2 geschaffen ist.

Im unteren Bereich weist die Wand 6 mehrere Aussparungen 8 auf. Wasser, welches von oben in den Reservespeicher 5 eindringt, kann nicht nur durch die darunter befindlichen Versickerungsöffnungen 3 den Muldenabschnitt 1 verlassen, sondern es kann im unteren Bereich des Muldenabschnitts 1 auch aus den Aussparungen 8 zur Seite und zu Versickerungsöffnungen 3 strömen, die sich in demselben oder in einem benachbarten Muldenabschnitt 1 befinden, und die jedenfalls nicht direkt unter dem Reservespeicher 5 angeordnet sind. Sowohl die direkt unter dem Reservespeicher 5 angeordneten Versickerungsöffnungen 3 im Boden 4 als auch die Aussparungen 8 in der Wand 6 stellen daher Ablauföffnungen des Reservespeichers 5 dar.

Das Wasser strömt bei ausreichendem Füllstand innerhalb des Muldenabschnitts 1 von oben in den Reservespeicher 5 ein. Die Wand 6 schafft hierzu an ihrem oberen Ende eine Zulauföffnung 10, die sich über den gesamten Querschnitt des Reservespeichers 5 erstreckt und lediglich von der Wand 6 begrenzt ist.

Jede Versickerungsöffnung 3 ist von einem Kragen 9 umgeben, der sich vom Boden 4 aus nach oben erstreckt, so dass ein gewisser Mindest-Füllstand an Wasser in dem gesamten Muldenabschnitt 1 sichergestellt werden kann, was für die biologischen Anteile des Substrats im gesamten Innenraum des Muldenabschnitts 1, auch im Reservespeichers 5, vorteilhaft ist.

Zum Betrieb des Muldenabschnitts 1 als Teil einer Versickerungsmulde wird der Muldenabschnitt 1 mit einem Substrat befüllt, welches sowohl biologisch als auch mechanisch das in die Versickerungsmulde gelangende Oberflächenwasser von Schadstoffen reinigt. Das Substrat wird in den gesamten Innenraum des Muldenabschnitts 1 eingefüllt, auch in den Reservespeicher 5. Der Füllstand des Substrats außerhalb des Reservespeichers 5 liegt unterhalb der Zulauföffnung 10, so dass im Normalfall Wasser im Wesentlichen ausschließlich außerhalb des Reservespeichers 5 durch das Substrat nach unten sickert und den Muldenabschnitt 1 durch die Versickerungsöffnungen 3 verlässt. Bei großen Wassermengen oder bei nachlassender Versickerungsleistung steigt der Wasserstand außerhalb des Reservespeichers 5 jedoch an, bis Wasser über die Zulauföffnung 10 in den Reservespeicher 5 gelangen und dort mit hoher Versickerungsleistung abfließen kann.

## Patentansprüche

1. Muldenabschnitt (1) einer zur Aufnahme von Oberflächenwasser dienenden Versickerungsmulde,
mit zwei Seitenwänden (2) und einem Boden (4) und mit einem Substrat,
wobei in dem Muldenabschnitt (1) Versickerungsöffnungen (3) für das Wasser vorgesehen sind, und wobei der Innenraum des Muldenabschnitts (1) einen Raum zur Aufnahme von dem Substrat zur biologischen Behandlung des Wassers schafft,
**dadurch gekennzeichnet,**
**dass** im mittleren Bereich des Innenraums ein separater Reservespeicher (5) als Raum zur Aufnahme von dem Substrat angeordnet ist,
wobei der Reservespeicher (5) eine obere Zulauföffnung (10) und eine Ablauföffnung, die tiefer als die Zulauföffnung (10) angeordnet ist, aufweist,
wobei der Reservespeicher (5) eine umlaufende Wand (6) aufweist,
und wobei das Substrat sowohl innerhalb des Reservespeichers als
auch außerhalb des Reservespeichers angeordnet ist.

2. Muldenabschnitt nach Anspruch 1,
**dadurch gekennzeichnet,**
**dass** im Innenraum eine Füllstandsmarkierung für das einzufüllende Substrat angeordnet ist und die Zulauföffnung (10) des Reservespeichers (5) höher als die Füllstandsmarkierung angeordnet ist.

3. Muldenabschnitt nach Anspruch 1 oder 2,
**dadurch gekennzeichnet,**
**dass** die Wand (6) des Reservespeichers (5) im Abstand von den Seitenwänden (2) verläuft.

4. Muldenabschnitt nach Anspruch 3,
**dadurch gekennzeichnet,**
**dass** die Wand (6) des Reservespeichers (5) mit den Seitenwänden (2) durch Verbindungsstege (7) verbunden ist.

5. Muldenabschnitt nach Anspruch 1 oder 2,
**dadurch gekennzeichnet,**
**dass** die Wand (6) des Reservespeichers (5) an die Seitenwände (2) angrenzt,
wobei sich die Querschnittsfläche des Reservespeichers (5) zu den Seitenwänden (2) hin verringert.

6. Muldenabschnitt nach einem der vorhergehenden Ansprüche,
**dadurch gekennzeichnet,**
**dass** die Zulauföffnung (10) des Reservespeichers (5) im Abstand von den Seitenwänden (2) des Muldenabschnitts (1) angeordnet ist.

7. Muldenabschnitt nach einem der vorhergehenden Ansprüche,
**dadurch gekennzeichnet,**
**dass** der Reservespeicher (5) unten an den Boden (4) des Muldenabschnitts (1) anschließt.

8. Muldenabschnitt nach einem der vorhergehenden Ansprüche,
**dadurch gekennzeichnet,**
**dass** der Reservespeicher (5) eine kreisrunde Wand (6) aufweist.

9. Muldenabschnitt nach einem der vorhergehenden Ansprüche,
**dadurch gekennzeichnet,**
**dass** die Zulauföffnung (10) des Reservespeichers (5) lediglich von der Wand (6) des Reservespeichers (5) begrenzt ist,
derart, dass der Reservespeicher (5) eine sich über seinen gesamten Querschnitt erstreckende Zulauföffnung (10) aufweist.

## Claims

1. Trough section (1) of a trickle trough serving to receive surface water,
with two side-walls (2) and a bottom element (4) with a substrate,
where trickle holes (3) for the water are provided for in the trough section (1),
and where the inside space in the trough section (1) provides a space to receive the substrate for biological treatment of the water,
**characterised in that** a separate reserve storage means (5) is disposed in the central area of the inside space as a space to receive the substrate,
where the reserve storage means (5) incorporates an upper intake hole (10) and a drainage hole that is disposed further down than the intake hole (10),
where the reserve storage means (5) incorporates a wall (6) extending all the way round, and where the substrate is disposed both inside the reserve storage means and outside the reserve storage means.

2. Trough section in accordance with claim 1,
**characterised in that** a fill-level mark for the substrate to be filled in is disposed inside the inside space and the intake hole (10) to the reserve storage means (5) is disposed further up than the fill-level mark.

3. Trough section in accordance with claim 1 or 2,
**characterised in that** the wall (6) of the reserve storage means (5) extends at a distance from the side-walls (2) of the trough section (1).

4. Trough section in accordance with claim 3,
**characterised in that** the wall (6) of the reserve storage means (5) is joined to the side-walls (2) of the trough section (1) by means of connecting webs (7).

5. Trough section in accordance with claim 1 or 2,
**characterised in that** the wall (6) of the reserve storage means (5) adjoins the side-walls (2) of the trough section (1), where the cross-sectional surface of the reserve storage means (5) decreases towards the side-walls (2) of the trough section (1).

6. Trough section in accordance with any one of the foregoing claims,
**characterised in that** the intake hole (10) of the reserve storage means (5) is disposed at a distance from the side-walls (2) of the trough section (1).

7. Trough section in accordance with any one of the foregoing claims,
**characterised in that** the reserve storage means (5) is joined to the bottom (4) of the trough section (1).

8. Trough section in accordance with any one of the foregoing claims,
**characterised in that** the reserve storage means (5) incorporates a circular wall (6).

9. Trough section in accordance with any one of the foregoing claims,
**characterised in that** the intake hole (10) of the reserve storage means (5) is delimited solely by the wall (6) of the reserve storage means (5) in such a way that the reserve storage means (5) incorporates an intake hole (10) that extends over the entire cross-section of the reserve storage means (5).

## Revendications

1. Partie (1) d'une fosse d'infiltration destinée à recevoir les eaux superficielles,
composée de deux parois latérales (2), d'un fond (4) et d'un substrat,
sachant que dans la partie (1) de fosse sont prévus des orifices d'infiltration (3) pour l'eau, et sachant que le volume intérieur de la partie (1) de fosse présente un volume destiné à recevoir le substrat servant au traitement biologique de l'eau,
**caractérisée en ce que** dans la partie médiane du volume intérieur est disposé un récipient accumulateur (5) séparé en tant que volume destiné à recevoir le substrat,
sachant que le récipient accumulateur (5) présente un orifice supérieur d'amenée (10) et un orifice d'écoulement qui est disposé plus bas que l'orifice d'amenée (10),
sachant que le réservoir accumulateur (5) présente une paroi périphérique (6),
et sachant que le substrat est disposé aussi bien à l'intérieur du récipient accumulateur qu'à l'extérieur du récipient accumulateur.

2. Partie de fosse selon la revendication 1,
**caractérisée en ce que** dans le volume intérieur est disposé un marquage du niveau de remplissage du substrat à verser, et que l'orifice d'amenée (10) du récipient accumulateur (5) est disposé plus haut que le marquage du niveau de remplissage.

3. Partie de fosse selon la revendication 1 ou 2,
**caractérisée en ce que** la paroi (6) du récipient accumulateur (5) présente un tracé distant des parois latérales (2) de la partie (1) de fosse.

4. Partie de fosse selon la revendication 3,
**caractérisée en ce que** la paroi (6) du récipient accumulateur (5) est reliée aux parois latérales (2) de la partie (1) de fosse par des nervures de liaison (7).

5. Partie de fosse selon la revendication 1 ou 2,
**caractérisée en ce que** la paroi (6) du récipient accumulateur (5) jouxte les parois latérales (2), sachant que la surface de la section du récipient accumulateur (5) va en diminuant en direction des parois latérales (2) de la partie (1) de fosse.

6. Partie de fosse selon l'une des revendications précédentes,
**caractérisée en ce que** l'orifice d'amenée (10) du récipient accumulateur (5) est disposé à distance des parois latérales (2) de la partie (1) de fosse.

7. Partie de fosse selon l'une des revendications précédentes,
**caractérisée en ce que** le récipient accumulateur (5) se raccorde, en bas, au fond (4) de la partie (1) de fosse.

8. Partie de fosse selon l'une des revendications précédentes,
**caractérisée en ce que** récipient accumulateur (5) présente une paroi (6) circulaire.

9. Partie de fosse selon l'une des revendications précédentes,
**caractérisée en ce que** l'orifice d'amenée (10) du récipient accumulateur (5) est limité seulement par la paroi (6) du récipient accumulateur (5), de sorte que le récipient accumulateur (5) présente un orifice d'amenée (10) s'étendant sur la totalité de sa section.
